(19) Europäisches Patentamt European Patent Office Office européen des brevets

(11) **EP 3 866 358 A1**

(12) **EUROPEAN PATENT APPLICATION**
published in accordance with Art. 153(4) EPC

(43) Date of publication:
**18.08.2021 Bulletin 2021/33**

(51) Int Cl.:
**H04J 3/06** $^{(2006.01)}$

(21) Application number: **20829786.1**

(22) Date of filing: **06.01.2020**

(86) International application number:
**PCT/CN2020/070381**

(87) International publication number:
**WO 2021/120344 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2019 CN 201911314492**

(71) Applicant: **Shenyang Institute of Automation, Chinese Academy of Sciences Shenyang, Liaoning 110016 (CN)**

(72) Inventors:
• **YU, Haibin**
  **Shenyang**
  **Liaoning 110016 (CN)**
• **ZENG, Peng**
  **Shenyang**
  **Liaoning 110016 (CN)**

• **LI, Dong**
  **Shenyang**
  **Liaoning 110016 (CN)**
• **LI, Zhibo**
  **Shenyang**
  **Liaoning 110016 (CN)**
• **LIU, Jindi**
  **Shenyang**
  **Liaoning 110016 (CN)**
• **YU, Xueting**
  **Shenyang**
  **Liaoning 110016 (CN)**
• **YANG, Ming**
  **Shenyang**
  **Liaoning 110016 (CN)**

(74) Representative: **Mewburn Ellis LLP**
  **Aurora Building**
  **Counterslip**
  **Bristol BS1 6BX (GB)**

(54) **TIME SYNCHRONIZATION METHOD FOR REDUNDANT NETWORK**

(57)    The present application discloses a time synchronization method of a redundant network. A network node conducts clock synchronization with an adjacent node. When the network has redundant links, the nodes with the redundant links can synchronize clocks with different neighbors through different links, and can calculate the estimated value of the standard clock through the weighted average, wherein a weighting parameter depends on the clock error factor of the neighbor node and the link delay with the neighbor node; and the clock error factor of the node is calculated through the clock error factor of the neighbor node, the link delay with the neighbor node, and the slope of the local clock.

**EP 3 866 358 A1**

Fig. 1a

Fig. 1b

## Description

### Technical Field

The present invention relates to the field of network communication, and in particular to a time synchronization method of a redundant network.

### Background

Under the background of the rapid development of the modern industry, the requirements for multi-system collaborative work in industrial sites of the fields such as power systems, robot control and workshop-level automation control systems become higher. Therefore, a common time reference is needed to ensure reliable operation of a system.

In most Ethernet systems, a precision clock synchronization protocol defined by IEEE1588 is used to achieve synchronization between devices. The basic principle of the IEEE1588 protocol is that a slave clock and a master clock are synchronized in a network through hardware and software. The synchronization accuracy can be up to a nanosecond level, so as to adapt to different access environments, thereby effectively solving a real-time problem in an industrial network. The IEEE1588 protocol has been widely used in many fields such as military field, remote communication, power systems and numerical control systems.

However, in the typical time synchronization protocol represented by IEEE1588, link delay often greatly influences the synchronization accuracy. Although the link delay can be compensated in IEEE1588v2, the asymmetry of single-link delay still greatly influences the accuracy of time synchronization. To solve the above problem, the present invention evaluates the time synchronization errors which may be caused by different links for a network system with redundant links, and reduces the synchronization errors caused by asymmetry of single-link delay through the weighted average of multiple links.

### Summary

To solve the above technical problem, the purpose of the present invention is to provide a time synchronization method of a redundant network.

The present invention adopts the following technical solution: a time synchronization method of a redundant network comprises the following steps:

> a node in the network identifies a neighbor node through multicasting, and a real or virtual link is present between the node and the neighbor node which obtains time synchronization multicasting data of the node;
> for a certain node:
> a clock slope and an initial clock offset are calculated through a clock error factor; a local clock of the node is obtained according to the compensated clock slope and initial clock offset, and a linear relationship between the local clock of the node and a standard clock;
> the estimated value of the standard clock of the node after synchronization is obtained according to the compensated clock slope and initial clock offset, and the local clock of the node, to realize the time synchronization between the node and the neighboring node.

For a certain node, a linear relationship model is used between the local clock and the standard clock:

$$\tau(t) = \alpha t + \beta$$

wherein $\tau(t)$ is the local clock; t is the standard clock; $\alpha$ is the clock slope; $\beta$ is the initial clock offset.

The network node counts the clock slope $\alpha$ in a period of time T to obtain the mean value and standard deviation of the clock slope.

All nodes in the network maintain own clock error factors $Q$; and a clock source error factor is $Q = 0$ and the initial error factor of other nodes is $Q = \infty$.

The network node only synchronizes the clocks with the neighbor nodes with a smaller error factor than the network node.

The step that a clock slope and an initial clock offset are calculated through a clock error factor of the node is specifically as follows:

$$\alpha = \frac{\sum_{i=0}^{n} \left(\frac{1}{Q_{Li}+Q_i}\right) \times \alpha_i}{\sum_{i=0}^{n} \left(\frac{1}{Q_{Li}+Q_i}\right)}$$

$$\beta = \frac{\sum_{i=0}^{n} \left(\frac{1}{Q_{Li}+Q_i}\right) \times \beta_i}{\sum_{i=0}^{n} \left(\frac{1}{Q_{Li}+Q_i}\right)}$$

wherein $\{i\}$ represents a node set of the neighboring nodes having node clock error factors less than the current node clock error factor of the current node; n represents the number of the nodes in the neighboring nodes having node clock error factors less than the current node clock error factor of the current node; $Q_i$ represents the node clock error factor of the neighbor node i; $Q_{Li}$ represents a link synchronization error factor with the neighbor node i; $\alpha_i$ is a link clock slope calculated by the neighbor node i; $\beta_i$ is the initial clock offset calculated by the neighbor node i; $\alpha$ is the clock slope; and $\beta$ is the initial clock offset.

A certain node obtains a link delay $\tau$ with the neighbor node, and calculates a link synchronization error factor $Q_L$:

$$Q_L = \frac{2S_\tau \times M_\tau}{S_\tau + 2M_\tau}$$

wherein $\tau$ represents the link delay; $M_\tau$ represents the mean value of the link delay of the link in a period of time $T$; and $S_\tau$ represents the standard deviation of the link delay in the same period of time.

The link delay $\tau$ of the neighbor node is calculated by the same method of calculating the delay in the time synchronization algorithm.

For a certain node in the network, a calculation process of the node clock error factor $Q$ is as follows:

$$Q = \left(1 + \frac{S_\alpha}{M_\alpha}\right) \times \frac{n}{\sum_{i=0}^{n} \left(\frac{1}{Q_{Li}+Q_i}\right)}$$

wherein $\{i\}$ represents a node set of the neighboring nodes having node clock error factors less than the current node clock error factor of the current node; n represents the number of the nodes in the neighboring nodes having node clock error factors less than the current node clock error factor of the current node; $Q_i$ represents the node clock error factor of the neighbor node i; $Q_{Li}$ represents a link synchronization error factor with the neighbor node i; $\alpha$ is the clock slope; $M_\alpha$ is the mean value of the clock slope in a period of time $T$; $S_\alpha$ is the standard deviation of the clock slope in a period of time T.

For the neighbor node which obtains the time synchronization multicasting data of a certain node, the local clock of the neighbor node is $\tau(t) = m_0$, and the standard clock t is:

$$t = \frac{m_0 - \beta}{\alpha}$$

the compensated clock slope $\alpha$ and initial clock offset $\beta$ are substituted into the above formula to obtain the standard clock.

The present invention has the following beneficial technical effects and advantages:

1. For the network system with redundant links, the present invention synchronizes node clocks through multiple links, and calculates final synchronization results through the weighted average, so as to reduce the synchronization errors caused by the problem of asymmetry of single-link delay.

2. The present invention establishes the clock synchronization error model of different nodes, and can evaluate the potential clock synchronization error of any node in the network, thereby providing a basis for improving the clock synchronization accuracy.

**Description of Drawings**

Fig. 1a is a schematic diagram 1 of a typical network topology applicable to the present invention;
Fig. 1b is a schematic diagram 2 of a typical network topology applicable to the present invention; and
Fig. 2 shows a calculation process of synchronous compensation parameters for two nodes through a single link.

**Detailed Description**

The technical solution in the embodiments of the present invention will be clearly and fully described below in combination with the drawings in the embodiments of the present invention. Apparently, the described embodiments are merely part of the embodiments of the present invention, not all of the embodiments. Based on the embodiments in the present invention, all other embodiments obtained by those ordinary skilled in the art without contributing creative labor will belong to the protection scope of the present invention.

The present application discloses a time synchronization method of a redundant network. A network node conducts clock synchronization with an adjacent node. When the network has redundant links, the nodes with the redundant links can synchronize clocks with different neighbors through different links, and can calculate the estimated value of the standard clock through the weighted average, wherein a weighting parameter depends on the clock error factor of the neighbor node and the link delay with the neighbor node; and the clock error factor of the node is calculated through the clock error factor of the neighbor node, the link delay with the neighbor node, and the slope of the local clock.

A time synchronization method of a redundant network is provided. A node in the network identifies a neighbor node through multicasting, and a real or virtual link is present between the node and another node which can obtain time synchronization multicasting data of the node.

The network node counts the clock slope $\alpha$ in a period of time T.

Clock synchronization nodes in the network maintain own clock error factors $Q$; and a clock source error factor is $Q = 0$ and the initial error factor of other nodes is $Q = \infty$.

The network node only synchronizes the clocks with the neighbor nodes with a smaller error factor than the network node.

The network node obtains a link delay $\tau$ with the neighbor node, and calculates a link synchronization error factor $Q_L$:

$$Q_L = \frac{2S_\tau \times M_\tau}{S_\tau + 2M_\tau}$$

wherein $\tau$ represents the link delay; $M_\tau$ represents the mean value of the link delay of the link in a period of time $T$; and $S_\tau$ represents the standard deviation of the link delay in the same period of time.

The link delay $\tau$ of the neighbor node is calculated by the same method of calculating the delay in the time synchronization algorithm (for example, when the time synchronization algorithm in 1588v2 is used to compensate for link delay, the method needs to conduct compensation in the same way when calculating link delay $\tau$).

The calculation method of compensation parameters is as follows:

$$\alpha = \frac{\sum_{i=0}^{n}\left(\frac{1}{Q_{Li}+Q_i}\right) \times \alpha_i}{\sum_{i=0}^{n}\left(\frac{1}{Q_{Li}+Q_i}\right)}$$

$$\beta = \frac{\sum_{i=0}^{n}\left(\frac{1}{Q_{Li}+Q_i}\right) \times \beta_i}{\sum_{i=0}^{n}\left(\frac{1}{Q_{Li}+Q_i}\right)}$$

wherein $\{i\}$ represents a node set of the neighboring nodes having error factors less than the current error factor of the current node; n represents the number of the nodes in the neighboring nodes having error factors less than the current error factor of the current node; $Q_i$ represents the synchronization error factor of the neighbor node $i$; $Q_{Li}$ represents a link synchronization error factor with the neighbor node $i$; $\alpha_i$ is a link clock slope calculated by the neighbor node i; $\beta_i$ is the initial clock offset calculated by the neighbor node i;

The calculation process of the node clock error factor Q is as follows:

$$Q = \left(1 + \frac{S_\alpha}{M_\alpha}\right) \times \frac{n}{\sum_{i=0}^{n}\left(\frac{1}{Q_{Li}+Q_i}\right)}$$

wherein {$i$} represents a node set of the neighboring nodes having error factors less than the current error factor of the current node; n represents the number of the nodes in the neighboring nodes having error factors less than the current error factor of the current node; $Q_i$ represents the synchronization error factor of the neighbor node $i$; $Q_{Li}$ represents a link synchronization error factor with the neighbor node i; $\alpha$ is the clock slope; $M_\alpha$ is the mean value of the clock slope in a period of time $T$; $S_\alpha$ is the standard deviation of the clock slope in a period of time T.

For the local clock $t$ = m$_0$, the standard clock t is:

$$t = \frac{m_0 - \beta}{\alpha}$$

$\alpha$ and $\beta$ are respectively the clock slope and the initial clock offset.

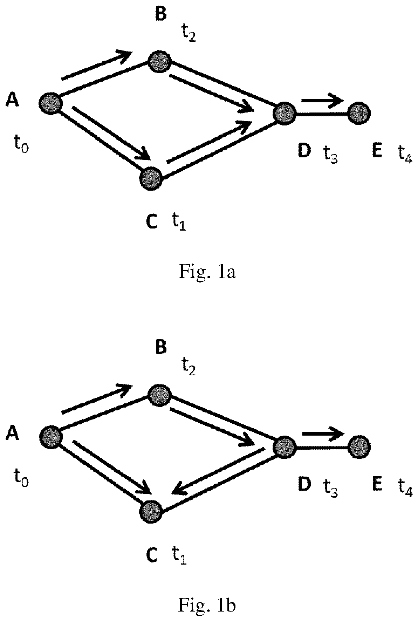

1. By referring to Fig. 1a to Fig. 1b, four nodes A, B, C and D form a ring topology network, and a single link is present between node D and node E, wherein node A is the clock source, which sends clock information in the form of multicasting through two links AB and AC. After node B receives the synchronization information sent by A, node B confirms that A is a neighbor node of the node B. After synchronization with A, node B sends the synchronized clock information in the form of multicasting through the two links AB and BD, rather than sending the multicasting clock information of A through link BD. Nodes C and D are similar.

2. For node B, a linear relationship model is used between the local clock and the standard clock:

$$\tau(t) = \alpha t + \beta$$

wherein $\tau(t)$ is the local clock; t is the standard clock obtained through time synchronization; $\alpha$ is the clock slope; $\beta$ is the initial clock offset.

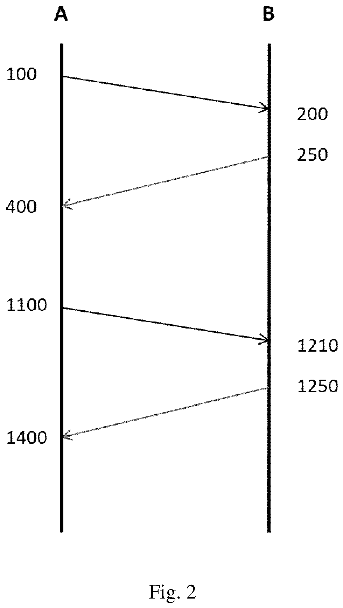

By referring to Fig. 2, node B and node A conduct two time synchronization message transfers. For the first time, node A sends a synchronization message to B at local time 100; B receives the message at local clock time 200 and sends a return message at local clock time 250; and A receives the message at the local clock time 400. For the second time, node A sends a synchronization message to B at local time 1100; B receives the message at local clock time 1210, and sends a return message at local clock time 1250; and A receives the message at local clock time 1400. Through computation, $\alpha \approx 1.005$ and $\beta \approx$ -25.999.

After multiple synchronizations, several synchronization results can be taken to calculate $\alpha$ and $\beta$ through linear regression.

3. After multiple clock synchronizations, the calculated $\alpha$ value is changed. For example, the $\alpha$ values in the synchronization results of the last 5 times is {1.005,0.998,1.004,1.006,1.010}.

4. By referring to Fig. 1, nodes A, B, C, D and E have own clock error factors; A is the clock source; therefore, $Q_A$ = 0; and initially, the clock source error factors of B, C, D and E are $\infty$.

5. By referring to Fig. 1a, in the initial process, for nodes A and B, because the initial value of the clock source error factor of B is $\infty$, B and A conduct clock synchronization. Similarly, C and A are synchronized, D is synchronized with B and C, and E and D are synchronized. By referring to Fig. 1b, after one synchronization, because the clock source error factor of the link AC is too large, the clock source error factor of the node C is larger than the clock source error factor of the node D. At this moment, the node D is not synchronized with the node C, but is synchronized with the node B; and the node C is synchronized with A and D.

6. By referring to Fig. 2, for the link AB, because the delay asymmetry is unknown, the delay from A to B can only be regarded to be equal to the delay from B to A. For the synchronized clock, the delay from A to B can be known as about 125. Similarly, a plurality of links from A to B are obtained. If five of the delays are {125,120,110,118,127}, the synchronization error factor $Q_{AB}$ of the link AB is calculated by the formula:

$$Q_{AB} = \frac{2S_\tau \times M_\tau}{S_\tau + 2M_\tau} = \frac{2 \times 6.67 \times 120}{6.67 + 2 \times 120} \approx 6.49$$

wherein $\tau$ represents the link delay; $M_\tau = 120$ represents the mean value of the link delay of the link in a period of time $T$; and $S_\tau = 6.67$ represents the standard deviation of the link delay in the same period of time.

7. The calculation method of the delay of the link AB is the same as that of the delay in the time synchronization process.

8. By referring to Fig. 2, the node B is only synchronized with the node A, and thus, the following is calculated:

$$\alpha_B = \frac{\sum_{i=0}^{n} \left( \frac{1}{Q_{Li}+Q_i} \right) \times \alpha_i}{\sum_{i=0}^{n} \left( \frac{1}{Q_{Li}+Q_i} \right)} = \alpha_{BA} = 1.005$$

$$\beta_B = \frac{\sum_{i=0}^{n} \left( \frac{1}{Q_{Li}+Q_i} \right) \times \beta_i}{\sum_{i=0}^{n} \left( \frac{1}{Q_{Li}+Q_i} \right)} = \beta_{BA} = -25.999$$

$\alpha_B$ and $\beta_B$ are respectively the clock slope and the initial clock offset of the node B. By referring to Fig. 1a, for the node D, the following is calculated:

$$\alpha_D = \frac{\sum_{i=0}^{n} \left( \frac{1}{Q_{Li}+Q_i} \right) \times \alpha_i}{\sum_{i=0}^{n} \left( \frac{1}{Q_{Li}+Q_i} \right)} = \frac{\frac{1}{Q_{DB}+Q_B} \times \alpha_{DB} + \frac{1}{Q_{DC}+Q_C} \times \alpha_{DC}}{\frac{1}{Q_{DB}+Q_B} + \frac{1}{Q_{DC}+Q_C}}$$

$$\beta_D = \frac{\sum_{i=0}^{n} \left( \frac{1}{Q_{Li}+Q_i} \right) \times \beta_i}{\sum_{i=0}^{n} \left( \frac{1}{Q_{Li}+Q_i} \right)} = \frac{\frac{1}{Q_{DB}+Q_B} \times \beta_{DB} + \frac{1}{Q_{DC}+Q_C} \times \beta_{DC}}{\frac{1}{Q_{DB}+Q_B} + \frac{1}{Q_{DC}+Q_C}}$$

wherein $\{i\}$ is a set of the nodes B and C; n is 2; $Q_B$ is the clock error factor of the node B; $Q_{DB}$ is the clock error factor of the link BD; $Q_C$ is the clock error factor of the node C; $Q_{DC}$ is the clock error factor of the link CD; $\alpha_{DB}$ is a link clock slope calculated by the neighbor node B; $\beta_{DB}$ is the initial clock offset calculated by the neighbor node B; $\alpha_{DC}$ is a link clock slope calculated by the neighbor node C; $\beta_{DC}$ is the initial clock offset calculated by the neighbor node C;

9. For the node B, $Q_{AB} = 6.49$ ; according to step 3, the value of $\alpha$ is {1.005,0.998,1.004,1.006,1.010}; the neighbor node with a smaller clock error factor is only A, and $Q_A = 0$; a formula is used to calculate:

$$Q_B = \left( 1 + \frac{S_{\alpha B}}{M_{\alpha B}} \right) \times \frac{n}{\sum_{i=0}^{n} \left( \frac{1}{Q_{Li}+Q_i} \right)} = \left( 1 + \frac{0.043}{1.046} \right) \times \frac{1}{\frac{1}{6.49+0}} = 6.75$$

wherein $\{i\}$ represents a node set of the neighboring nodes having error factors less than the current error factor of the current node, i.e., node A; n represents the number of the nodes in the neighboring nodes having error factors less than the current error factor of the current node, i.e., 1; $Q_i$ represents the synchronization error factor of the neighbor node i, i.e., $Q_A = 0$; $Q_{Li}$ represents the link synchronization error factor of the neighbor node i, i.e., $Q_{AB} = 6.49$; $\alpha_B$ is the clock slope; $M_{\alpha B}$ is the mean value of the clock slope of node B in a period of time $T$, i.e., $M_{\alpha B} = 1.046$; $S_{\alpha B}$ is the standard deviation $T$ of the clock slope of node B in a period of time $S_{\alpha B} = 0.043$.

By referring to Fig. 1a, for the node D, the following is calculated:

$$Q_D = \left(1 + \frac{S_\alpha}{M_\alpha}\right) \times \frac{n}{\sum_{i=0}^{n}\left(\frac{1}{Q_{Li}+Q_i}\right)} = \left(1 + \frac{S_{\alpha D}}{M_{\alpha D}}\right) \times \frac{2}{\frac{1}{Q_{DB}+Q_B} + \frac{1}{Q_{DC}+Q_C}}$$

wherein $\{i\}$ is a set of the nodes B and C; n is 2; $Q_B$ is the clock error factor of the node B; $Q_{DB}$ is the clock error factor of the link BD; $Q_C$ is the clock error factor of the node C; $Q_{DC}$ is the clock error factor of the link CD; $\alpha_D$ is the clock slope of D; $M_{\alpha D}$ is the mean value of the clock slope of the node D in a period of time $T$; $S_{\alpha D}$ is the standard deviation of the clock slope of the node D in a period of time T.

10. By referring to Fig. 2, for the node B, the local clock time is 1210, and the standard clock is:

$$t = \frac{1210 + 25.999}{1.005} = 1229.84$$

By referring to Fig. 1a, for the node D, the local clock can be calculated as $m_0$ time, and the standard clock is:

$$t = \frac{m_0 - \beta_D}{\alpha_D}$$

wherein $\alpha_D$ and $\beta_D$ are respectively the clock slope and the initial clock offset of D.

**Claims**

1.   A time synchronization method of a redundant network, **characterized by** comprising the following steps:

a node in the network identifies a neighbor node through multicasting, and a real or virtual link is present between the node and the neighbor node which obtains time synchronization multicasting data of the node;
for a certain node:

a clock slope and an initial clock offset are calculated through a clock error factor; a local clock of the node is obtained according to the compensated clock slope and initial clock offset, and a linear relationship between the local clock of the node and a standard clock;
the estimated value of the standard clock of the node after synchronization is obtained according to the compensated clock slope and initial clock offset, and the local clock of the node, to realize the time synchronization between the node and the neighboring node.

2.   The time synchronization method of the redundant network according to claim 1, **characterized in that** for a certain node, a linear relationship model is used between the local clock and the standard clock:

$$\tau(t) = \alpha t + \beta$$

wherein $\tau(t)$ is the local clock; t is the standard clock; $\alpha$ is the clock slope; $\beta$ is the initial clock offset.

3.   The time synchronization method of the redundant network according to claim 1, **characterized in that** the network node counts the clock slope $\alpha$ in a period of time T to obtain the mean value and standard deviation of the clock slope.

4.   The time synchronization method of the redundant network according to claim 1, **characterized in that** all nodes in the network maintain own clock error factors $Q$; and a clock source error factor is $Q = 0$ and the initial error factor of other nodes is $Q = \infty$.

5.   The time synchronization method of the redundant network according to claim 4, **characterized in that** the network node only synchronizes the clocks with the neighbor nodes with a smaller error factor than the network node.

6.   The time synchronization method of the redundant network according to claim 1, **characterized in that** the step that a clock slope and an initial clock offset are calculated through a clock error factor of the node is specifically as follows:

$$\alpha = \frac{\sum_{i=0}^{n}\left(\frac{1}{Q_{Li}+Q_i}\right) \times \alpha_i}{\sum_{i=0}^{n}\left(\frac{1}{Q_{Li}+Q_i}\right)}$$

$$\beta = \frac{\sum_{i=0}^{n}\left(\frac{1}{Q_{Li}+Q_i}\right) \times \beta_i}{\sum_{i=0}^{n}\left(\frac{1}{Q_{Li}+Q_i}\right)}$$

wherein $\{i\}$ represents a node set of the neighboring nodes having node clock error factors less than the current node clock error factor of the current node; n represents the number of the nodes in the neighboring nodes having node clock error factors less than the current node clock error factor of the current node; $Q_i$ represents the node clock error factor of the neighbor node i; $Q_{Li}$ represents a link synchronization error factor with the neighbor node i; $\alpha_i$ is a link clock slope calculated by the neighbor node i; $\beta_i$ is the initial clock offset calculated by the neighbor node i; $\alpha$ is the clock slope; and $\beta$ is the initial clock offset.

7. The time synchronization method of the redundant network according to claim 6, **characterized in that** a certain node obtains a link delay $\tau$ with the neighbor node, and calculates a link synchronization error factor $Q_L$:

$$Q_L = \frac{2S_\tau \times M_\tau}{S_\tau + 2M_\tau}$$

wherein $\tau$ represents the link delay; $M_\tau$ represents the mean value of the link delay of the link in a period of time $T$; and $S_\tau$ represents the standard deviation of the link delay in the same period of time.

8. The time synchronization method of the redundant network according to claim 7, **characterized in that** the link delay $\tau$ of the neighbor node is calculated by the same method of calculating the delay in the time synchronization algorithm.

9. The time synchronization method of the redundant network according to claim 4 or 6, **characterized in that** for a certain node in the network, a calculation process of the node clock error factor $Q$ is as follows:

$$Q = \left(1 + \frac{S_\alpha}{M_\alpha}\right) \times \frac{n}{\sum_{i=0}^{n}\left(\frac{1}{Q_{Li}+Q_i}\right)}$$

wherein $\{i\}$ represents a node set of the neighboring nodes having node clock error factors less than the current node clock error factor of the current node; n represents the number of the nodes in the neighboring nodes having node clock error factors less than the current node clock error factor of the current node; $Q_i$ represents the node clock error factor of the neighbor node i; $Q_{Li}$ represents a link synchronization error factor with the neighbor node i; $\alpha$ is the clock slope; $M_\alpha$ is the mean value of the clock slope in a period of time $T$; $S_\alpha$ is the standard deviation of the clock slope in a period of time T.

10. The time synchronization method of the redundant network according to claim 1, **characterized in that** for the neighbor node which obtains the time synchronization multicasting data of a certain node, the local clock of the neighbor node is $\tau(t) = m_0$, and the standard clock t is:

$$t = \frac{m_0 - \beta}{\alpha}$$

the compensated clock slope $\alpha$ and initial clock offset $\beta$ are substituted into the above formula to obtain the standard clock.

B t₂

A

t₀

D t₃  E t₄

C t₁

Fig. 1a

B t₂

A

t₀

D t₃  E t₄

C t₁

Fig. 1b

**A**                    **B**

100

200

250

400

1100

1210

1250

1400

Fig. 2

## INTERNATIONAL SEARCH REPORT

| International application No. |
| --- |
| **PCT/CN2020/070381** |

### A. CLASSIFICATION OF SUBJECT MATTER

H04J 3/06(2006.01)i

According to International Patent Classification (IPC) or to both national classification and IPC

### B. FIELDS SEARCHED

Minimum documentation searched (classification system followed by classification symbols)

H04J; H04L; H04W; H04Q

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 时间, 时钟, 同步, 网络, 冗余, 环形, 时延, 补偿, 斜率, 偏移, 误差, 链路, 本地, time, clock, synchronization, network, redundancy, ring, delay, compensation, slope, error, link, local

### C. DOCUMENTS CONSIDERED TO BE RELEVANT

| Category* | Citation of document, with indication, where appropriate, of the relevant passages | Relevant to claim No. |
| --- | --- | --- |
| A | CN 103414532 A (ONLINE TECHNOLOGY CO., LTD.) 27 November 2013 (2013-11-27) description paragraphs [0020]-[0044], [0075]-[0087] | 1-10 |
| A | CN 105490799 A (NANJING UNIVERSITY OF POSTS AND TELECOMMUNICATIONS) 13 April 2016 (2016-04-13) entire document | 1-10 |
| A | CN 106921456 A (SHENYANG INSTITUTE OF AUTOMATION, CHINESE ACADEMY OF SCIENCES) 04 July 2017 (2017-07-04) entire document | 1-10 |
| A | CN 101170373 A (SHANGHAI AUTOMATION INSTRUMENTATION CO., LTD.) 30 April 2008 (2008-04-30) entire document | 1-10 |
| A | WO 2018065061 A1 (HUAWEI TECHNOLOGIES CO., LTD.) 12 April 2018 (2018-04-12) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 August 2020** | **23 September 2020** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/070381**

| Patent document cited in search report | | | Publication date (day/month/year) | Patent family member(s) | | | Publication date (day/month/year) |
|---|---|---|---|---|---|---|---|
| CN | 103414532 | A | 27 November 2013 | None | | | |
| CN | 105490799 | A | 13 April 2016 | None | | | |
| CN | 106921456 | A | 04 July 2017 | US | 2017366287 | A1 | 21 December 2017 |
| | | | | WO | 2017107261 | A1 | 29 June 2017 |
| CN | 101170373 | A | 30 April 2008 | None | | | |
| WO | 2018065061 | A1 | 12 April 2018 | CN | 109792698 | A | 21 May 2019 |